# EUROPEAN PATENT SPECIFICATION

(11) **EP 2 066 929 B1**
(45) Date of publication and mention of the grant of the patent: **07.09.2011**
(21) Application number: 07803584.7
(22) Date of filing: 21.09.2007
(51) Int. Cl.: F16H 61/662

(54) **CONTINUOUSLY VARIABLE TRANSMISSION WITH A HYDRAULIC CONTROL SYSTEM**
STUFENLOSES GETRIEBE MIT HYDRAULIKSTEUERUNGSSYSTEM
TRANSMISSION VARIABLE EN CONTINU AVEC UN SYSTEME DE COMMANDE HYDRAULIQUE

(30) Priority: 26.09.2006 NL 1032577
(43) Date of publication of application: 10.06.2009
(73) Proprietor: Robert Bosch GmbH, 70442 Stuttgart (DE)
(72) Inventor: VAN DER SLUIS, Francis Maria Antonius, 5271 HP Sint-Michielsgestel (NL)
(74) Representative: Plevier, Gabriel Anton Johan Maria
(86) International application number: PCT/EP2007/060047
(87) International publication number: WO 2008/037665

(56) References cited:
- EP-A- 0 826 910
- EP-A1- 1 482 215
- WO-A-03/074877
- WO-A-03/087627
- DE-A1- 3 727 633

## Description

The present invention relates to a continuously variable transmission with a hydraulic control system.

Such a transmission is known, for example from European patent publication EP-A-0,451,887. The known transmission is provided with a drive belt and two pulleys, each provided with two conical pulley sheaves which are movable relative to each other in the axial direction, between which pulley sheaves a part of the drive belt is accommodated. During operation of the transmission the drive belt is clamped between the pulley sheaves of the two pulleys by forcing the sheaves of a pulley towards each other under the influence of a hydraulic pressure exerted upon at least one sheave. The level of the hydraulic pulley pressures is the determining factor here for the transmission ratio, on the one hand, and the maximum torque to be transmitted between the pulleys, on the other hand.

In order to be able to regulate the abovementioned pulley pressures to the desired level, the transmission is provided with a hydraulic control system. The hydraulic control system here comprises an oil reservoir, an oil pump for generating an oil flow, and at least two pulley pressure control valves for regulating the individual pulley pressures. Apart from the pulley pressures, the pressure of the oil flow delivered by the oil pump during operation, or the line pressure, is also regulated by the hydraulic control system, which to that end is provided with a line pressure control valve. The line pressure control valve regulates the line pressure to the desired level by allowing the oil flow delivered by the oil pump, in short the pump flow, to pass through to a greater or lesser extent to a hydraulic line of the hydraulic control system in which a lower pressure prevails. It is possible here for the line pressure to be equal to a pulley pressure, so that the line pressure valve is also a pulley pressure valve. It is preferable, but not essential, for the abovementioned control valves to be controlled by means of an electronic control unit.

In general, it can be said that for the functioning of the known transmission it is important for the hydraulic control system to be capable of regulating the pulley pressures quickly, accurately and in a stable manner in response to the torque to be transmitted and the desired transmission ratio. The pulley pressures actually exerted must therefore in all circumstances correspond as well as possible to the desired pulley pressures. It is an object of the present invention to improve the known continuously variable transmission specifically with regard to the abovementioned aspect. To that end, the invention provides the construction according to Claim 1 below, by means of which in particular the response time and stability of the control valves can be improved.

The invention overcomes the limitation of the known control system that the volume of the pump flow has an influence on the size and functioning of the control valves. Here, for example, it is true that it is advantageous for the size and the controllability of the valve for a relatively light oil flow to flow through the valve. However, it is also true that a relatively great pump flow is actually advantageous - or is even essential - for the functioning of the transmission as a whole. For example, if the transmission ratio of the transmission is changed, a relatively great pump flow is needed to be able to achieve the movement of the pulley sheaves occurring in the process. In addition, the oil pump is generally driven directly by the engine of the vehicle in which the transmission is being used, so that at a low, for example stationary, engine speed, said transmission must be capable of generating an oil flow of sufficient volume. The pump flow generated at higher engine speeds is then proportionately, and actually unnecessarily greater.

In the construction according to the invention, at least the oil flow effectively delivered to the control system is advantageously adapted to the circumstances, i.e. the current oil consumption of the control system, in particular for the purpose of a change in the transmission ratio and the usual, pressure-dependent leakage losses. This means that the oil flow allowed to pass through by the line pressure valve can be relatively light and, in addition, can vary only to a slight extent, so that this valve is capable of very stably regulating the desired line pressure and, in addition, can respond quickly to a change in said line pressure.

It is noted that the international patent application WO-A-2003/087627, which document discloses all features of the preamble of claim 1, also shows a solution for controlling the flow of hydraulic fluid that is supplied towards a hydraulic user. According to this publication the said flow towards the hydraulic user is stabilized at a fixed, i.e. maximum level. In stead, according to the present invention, the said flow towards the hydraulic user is actively controlled in dependence on a flow of hydraulic fluid that is discharged from such hydraulic user. Thus, in the transmission according to the present invention, the said flow towards the user is not merely stabilized, but is also minimized.

In a further development of the invention, not claimed here, a controllable pump is provided, such as a variably drivable electric pump whose delivered pump flow is regulated depending on the abovementioned oil consumption of the control system.

According to the invention, which is suitable in particular for use in combination with a non-controllable pump, such a surplus of oil flow delivered by the pump is diverted, in other words discharged parallel to the line pressure valves and pulley pressure valves, to which end a pump flow control valve is provided between the pump and a hydraulic return line. The pump flow control valve is controllable here depending on the abovementioned surplus, or the difference between the oil flow delivered by the pump and the current oil flow required by the control system. The pump flow control valve acts here as a controllable hydraulic restriction. The return line conveys the diverted flow of oil, for example, directly back to the reservoir or through to rotating parts of the transmission, for the purpose of cooling and/or lubrication of said parts.

The invention will now be explained in greater detail by way of example with reference to the drawing, in which:
Figure 1 is a diagrammatic view of a part of a continuously variable transmission with drive belt and pulleys;
Figure 2 shows diagrammatically a hydraulic control system of the transmission of Figure 1;
Figure 3 shows a first exemplary embodiment, not claimed, of the hydraulic control system according to the invention;
Figure 4 shows a second exemplary embodiment of the hydraulic control system according to the invention;
Figure 5 shows a third exemplary embodiment of the hydraulic control system according to the invention; and
Figure 6 shows a fourth exemplary embodiment of the hydraulic control system according to the invention.

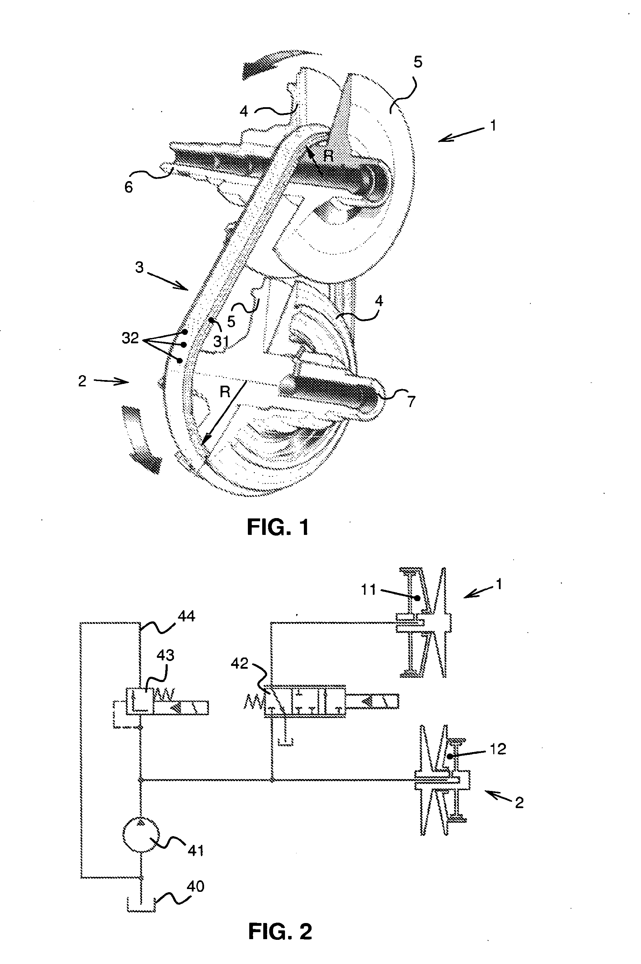

Figure 1 shows the central parts of a continuously variable transmission such as that used in the drive of, for example, private motor vehicles. The transmission is generally known per se and comprises a primary pulley 1 and a secondary pulley 2, each pulley comprising two pulley sheaves 4, 5 and a drive belt 3 accommodated between them. The pulley sheaves 4, 5 are of a conical shape, and at least one sheave 4 of a pulley 1, 2 is movable axially over a respective shaft 6, 7 on which the sheaves 4, 5 are fitted. The drive belt 3 shown in Figure 1 comprises a pair of endless metal carrier elements 31, each composed of a set of nested thin metal rings, which form a carrier for a series of metal transverse elements 32, which absorb the clamping forces exerted between the sheaves 4, 5 of a pulley 1, 2, and which are moved by a rotation of a driving pulley 1, pushing each other over the carrier elements 31 to a driven pulley 2. Such a type of drive belt is also known as the Van Doorne push belt and is described in further detail in, for example, European patent EP-A-0,626,526.

The transmission furthermore comprises a hydraulic control system, which can impose a hydraulic pressure P on the abovementioned one sheave 4 of the two pulleys 1, 2, in such a way that the drive belt 3 is clamped between the respective pulley sheaves 4, 5, and in such a way that, by means of friction in the conical contact face between the sheaves 4, 5 and the drive belt 3, mechanical power can be transmitted between the pulleys 1, 2. An example of such a control system is shown diagrammatically in Figure 2.

The control system is equipped to regulate a desired primary hydraulic pressure Pp in a primary pressure cylinder 11 of the primary pulley 1 and a desired secondary hydraulic pressure Ps in a secondary pressure cylinder 12 of the secondary pulley 2. In the control system shown here, said system to that end is provided with a reservoir 40 for hydraulic medium, i.e. oil, a pump 41 for generating an oil flow, a primary valve 42 for regulating the primary pressure Pp and a secondary valve 43 for regulating the secondary pressure Ps. The two valves 42, 43 are controlled electronically. The oil flow generated during operation by the oil pump 41, in short the pump flow, is brought by the secondary valve 43 to the desired line pressure P1, which at any rate in this example also serves as the secondary pressure Ps, the valve 43 allowing a surplus of the pump flow to pass to a hydraulic discharge line 44. In this example the discharge line 44 leads directly back to the reservoir 40. It is preferable, but not essential, for the abovementioned control valves 42, 43 to be controlled by means of an electronic control unit (not shown) .

A disadvantage of the arrangement of the known control system shown in Figure 1 is that, in particular in so-called static operational conditions, in which the volume of the pressure cylinders 11, 12 is substantially constant, a relatively large oil flow is discharged through the secondary valve 43. As a result of this, the secondary valve 43 has to be correspondingly large, with the result that in the given circumstances it does not have the optimum controllability, and it will not, for example, be able to respond in the optimum fast and/or precise manner to a change in the desired secondary pressure Ps and/or to a change in the volume of the pressure cylinders 11, 12.

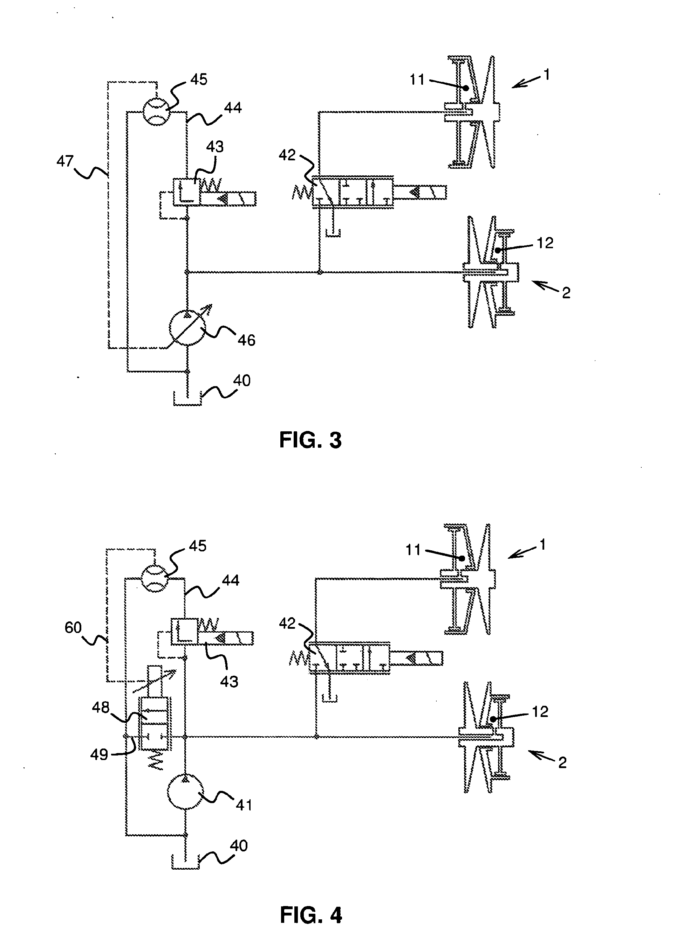

Figure 3 shows a first exemplary embodiment which is not claimed. In this control system according to the invention the discharge channel 44 is provided with oil flow measuring means 45 for measuring the oil flow discharged to the reservoir 40, and with a controllable pump 46, such as, for example, an electrically driven pump of which the oil flow to be generated can be varied as desired. In the hydraulic system according to the invention the controllable pump 46 is controlled in relation to the oil flow measured by the oil flow measuring means 45. For this purpose, the oil flow measuring means 45 transmit a signal that is representative for said measured oil flow to the controllable pump 46, or at any rate to pump control means (not shown) of said pump, which is symbolized in Figure 3 by the dashed connection line 47. By means of this control system, the oil flow discharged by way of the secondary valve 43 can be advantageously reduced, for example by regulating the pump flow of the controllable pump 46 in inverse proportion to the oil flow measured by the oil flow measuring means 45, preferably in such a way that the said pump flow assumes an at least virtually constant value.

Figure 4 shows a second exemplary embodiment of the hydraulic control system according to the invention, having the usually used mechanically driven pump 41 with a fixed pump volume per revolution/stroke. In this control system according to the invention the pump 41 is connected to a return line 49 by means of a pump flow control valve 48, while oil flow measuring means 45 for measuring the oil flow discharged to the reservoir 40 by way of the secondary valve 43 are also provided. By means of the pump flow control valve 48 and the return line 49, a greater or smaller part of the pump flow can be diverted, in other words can be discharged parallel to the secondary valve 43.

In the hydraulic system according to the invention the pump flow control valve 48 is controlled in relation to the oil flow measured by the oil flow measuring means 45. For this purpose, the oil flow measuring means 45 transmit a signal that is representative for said measured oil flow to the pump flow control valve 48, or at any rate to valve control means (not shown) of said pump flow control valve, which is symbolized in Figure 4 by the dashed connection line 60. The pump flow control valve 48 therefore functions here more or less like the known controllable hydraulic restriction. By 'means of this control system, the oil flow discharged by way of the secondary valve 43 can be advantageously reduced, by regulating the oil flow diverted through the pump flow control valve 48 in direct relation to the oil flow measured by the oil flow measuring means 45, preferably in such a way that said oil flow assumes an at least virtually constant value. In this way the surplus of the oil flow delivered by the pump 41 is discharged parallel to the secondary valve 43 to the reservoir 40.

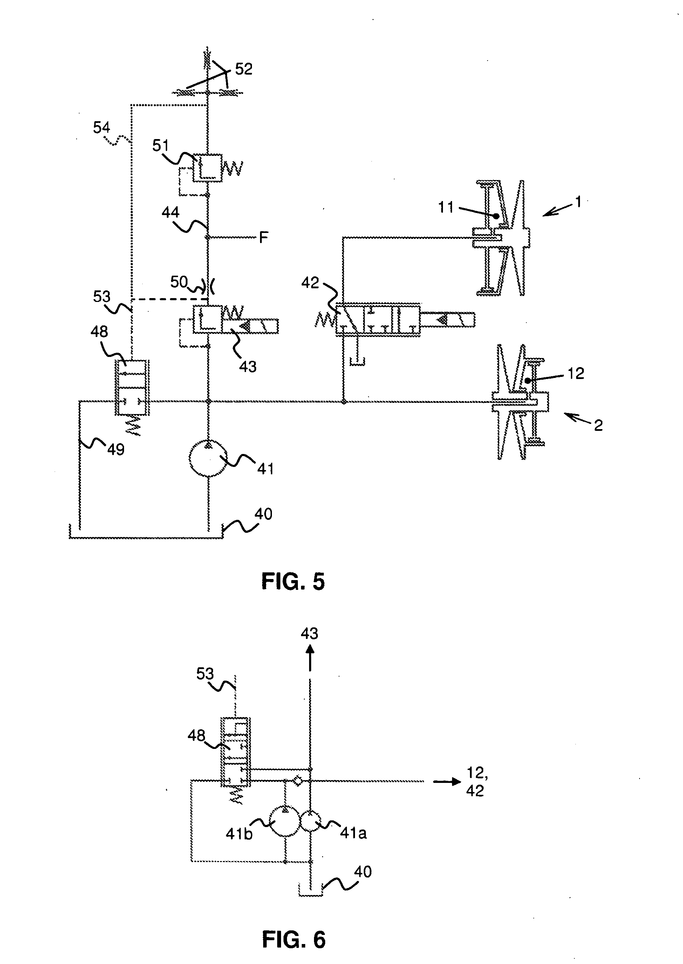

According to the invention, a simple hydraulic restriction 50 in the discharge line 44 can serve here as the abovementioned oil flow measuring means, which third exemplary embodiment of the hydraulic control system according to the invention is shown in Figure 5. The fact is that a first pressure level P1 just before, i.e. upstream of, the restriction is determined by the volume of the oil flow flowing through the restriction 50, at least in so far as a second pressure level P2 just beyond, i.e. downstream of, the restriction 50 is constant. This is the case if the oil flow beyond the restriction 50 can flow freely out of the discharge line 44 and, for example, into the reservoir 40, or if said second pressure level P2 is regulated by means of an additional pressure control valve 51.

In the layout of the control valve in Figure 5 a constant pressure level is achieved in the discharge line 44 of the secondary valve 43 by means of an additional pressure control valve 51. Such an additional system pressure with accompanying oil flow provides one or more of the usual further functions F of the control system, such as opening and closing of connections in the transmission and supplying so-called solenoids for the purpose of the hydraulic control of the abovementioned valves 43, 48 and 51. The oil flow that is subsequently allowed to pass through the additional pressure control valve 51 is ultimately used for lubricating and cooling rotating transmission components, here only diagrammatically indicated as a number of hydraulic restrictions 52. A major advantage of such an arrangement of the control system according to the invention is that the abovementioned first pressure level P1 can be used directly for control of the pump flow control valve 48 by means of a simple hydraulic pressure feedback or control line 53.

An alternative possibility according to the invention is for the lubrication pressure level to serve as the abovementioned first pressure level P1, by feeding said lubrication pressure level back to the pump flow control valve 48 by means of a control line 54. A major advantage of such an arrangement of the control system according to the invention is that an additional restriction 50 and accompanying additional pressure drop are not necessary. Moreover, a previously commonly used lubrication pressure control valve is no longer necessary, because the lubrication pressure is now controlled indirectly by the fact that the oil flow that flows through the relevant hydraulic restrictions 52 is regulated to a desired level by means of the control of the pump flow control valve 48 described here.

It is pointed out that, although the present invention has so far been described in relation to a single pump, it can also be used as a matter of course on a hydraulic control system with two or more pumps whose oil flows can be connected to each other in a known manner, for example such as disclosed in EP-A-1482215. Figure 6 gives an example of this in the form of a pump flow control valve 48 according to the invention that is suitable for use in a so-called single/dual connection of two pumps 41a and 41b.

The present invention is not restricted to the embodiments described above, but also relates to all details in the figures and is defined in the following claims.

## Claims

1. Continuously variable transmission provided with a drive belt (6) fitted between a primary pulley (1) and a secondary pulley (2) of the transmission, each pulley having two pulley sheaves (4, 5) of which at least one pulley sheave (4) in each case is axially movable under the influence of a hydraulic pressure exerted in a pressure cylinder (11; 12) of a respective pulley (1; 2), and with a hydraulic control system for controlling the abovementioned pressures, which system comprises at least a reservoir (40) for hydraulic medium, a pump (41) for generating a flow of hydraulic medium from the reservoir (40) to a pressure control valve (43) of the hydraulic control system for controlling the hydraulic pressure of said pump flow, the pressure control valve (43) discharging a surplus of the pump flow by way of a discharge line (44) in the direction of the reservoir (40), and to a further control valve (48) of the hydraulic control system for discharging a part of the pump flow parallel to the pressure control valve (43) to the reservoir (40) by way of a return line (49), **characterized in that** the system is also provided with oil flow measuring means (45; 50; 52) for measuring the oil flow in the discharge line (44) and with control means (60; 53; 54) for controlling the volume of the part of the pump flow discharged by the further control valve (48) via the return line (49) parallel to the pressure control valve (43) and the discharge line (44) depending on the oil flow measured by the oil flow measuring means (45; 50; 52).

2. Continuously variable transmission according to Claim 1, **characterized in that** the oil flow measuring means (45; 50; 52) comprise a hydraulic restriction (45; 50; 52), and **in that** the control means (60; 53; 54) comprise a pressure feedback line (60; 53; 54) which feeds back the pressure prevailing upstream of the restriction (45; 50; 52) to the pressure control valve (43) that is thus arranged to control the pump flow depending on the pressure level upstream of the restriction (45; 50; 52).

3. Continuously variable transmission according to Claim 2, **characterized in that** the hydraulic restriction (52) is a rotating transmission component that is lubricated and cooled by the oil flow discharged by the pressure control valve (43) to the reservoir (40).

## Patentansprüche

1. Stufenloses Getriebe, das mit einem zwischen einer Primärrolle (1) und einer Sekundärrolle (2) des Getriebes angebrachten Antriebsriemen (6), wobei jede Rolle zwei Rollenscheiben (4, 5) aufweist, von denen mindestens eine Rollenscheibe (4) in jedem Fall unter dem Einfluss eines in einem Druckzylinder (11; 12) einer jeweiligen Rolle (1; 2) ausgeübten Hydraulikdrucks axial beweglich ist, und mit einem Hydrauliksteuersystem zur Steuerung der oben genannten Drücke versehen ist, wobei das System mindestens einen Speicher (40) für Hydraulikmedium und eine Pumpe (41) zur Erzeugung eines Hydraulikmediumflusses aus dem Speicher (40) zu einem Drucksteuerventil (43) des Hydrauliksteuersystems zur Steuerung des Hydraulikdrucks des Pumpenflusses, wobei das Drucksteuerventil (43) einen Pumpenflussüberschuss mittels einer Abführleitung (44) in Richtung des Speichers (40) abführt, und zu einem weiteren Steuerventil (48) des Hydrauliksteuersystems zum Abführen eines Teils des Pumpenflusses parallel zum Drucksteuerventil (43) zum Speicher (40) mittels einer Rückführleitung (49) umfasst, **dadurch gekennzeichnet, dass** das System des Weiteren mit Ölflussmessmitteln (45; 50; 52) zum Messen des Ölflusses in der Abführleitung (44) und mit Steuermitteln (60; 53; 54) zum Steuern des Volumens des durch das weitere Steuerventil (48) über die Rückführleitung (49) parallel zum Drucksteuerventil (43) und von der Abführleitung (44) abgeführten Teils des Pumpenflusses in Abhängigkeit von dem durch die Ölflussmessmittel (45; 50; 52) gemessenen Ölfluss versehen ist.

2. Stufenloses Getriebe nach Anspruch 1, **dadurch gekennzeichnet, dass** die Ölflussmessmittel (45; 50; 52) eine Hydraulikdrossel (45; 50; 52) umfassen und dass die Steuermittel (60; 53; 54) eine Druckrückkopplungsleitung (60; 53; 54) umfassen, die den stromaufwärts der Drossel (45; 50; 52) herrschenden Druck zum Drucksteuerventil (43) zurückkoppeln, der somit zur Steuerung des Pumpenflusses in Abhängigkeit von der Druckhöhe stromaufwärts der Drossel (45; 50; 52) angeordnet ist.

3. Stufenloses Getriebe nach Anspruch 2, **dadurch gekennzeichnet, dass** die Hydraulikdrossel (52) eine Drehgetriebekomponente ist, die durch den von dem Drucksteuerventil (43) zum Speicher (40) abgeführten Ölfluss geschmiert und gekühlt wird.

## Revendications

1. Transmission à variation continue pourvue d'une courroie d'entraînement (6) installée entre une poulie principale (1) et une poulie secondaire (2) de la transmission, chaque poulie ayant deux rouets de poulie (4, 5), dont au moins un rouet de poulie (4) dans chaque cas est déplaçable axialement sous l'effet d'une pression hydraulique exercée dans un cylindre de pression (11 ; 12) d'une poulie respective (1 ; 2), et pourvue d'un système de commande hydraulique pour réguler les pressions susmentionnées, lequel système comprend au moins un réservoir (40) pour un fluide hydraulique, une pompe (41) pour générer un flux de fluide hydraulique depuis le réservoir (40) jusqu'à une soupape de régulation de la pression (43) du système de commande hydraulique pour réguler la pression hydraulique dudit flux de la pompe, la soupape de régulation de la pression (43) déchargeant un surplus du flux de la pompe par le biais d'une ligne de décharge (44) dans la direction du réservoir (40), et jusqu'à une soupape de régulation supplémentaire (48) du système de commande hydraulique pour décharger une partie du flux de la pompe parallèlement à la soupape de régulation de la pression (43) jusqu'au réservoir (40) par le biais d'une ligne de retour (49), **caractérisée en ce que** le système est également pourvu d'un moyen de mesure du flux d'huile (45 ; 50 ; 52) pour mesurer le flux d'huile dans la ligne de décharge (44) et de moyens de régulation (60 ; 53 ; 54) pour réguler le volume de la partie du flux de la pompe déchargé par la soupape de régulation supplémentaire (48) par le biais de la ligne de retour (49) parallèlement à la soupape de régulation de la pression (43) et à la ligne de décharge (44) en fonction du flux d'huile mesuré par le moyen de mesure du flux d'huile (45 ; 50 ; 52).

2. Transmission à variation continue selon la revendication 1, **caractérisée en ce que** le moyen de mesure du flux d'huile (45 ; 50 ; 52) comprend un étranglement hydraulique (45 ; 50 ; 52), et **en ce que** le moyen de régulation (60 ; 53 ; 54) comprend une ligne de renvoi de la pression (60 ; 53 ; 54) qui renvoie la pression régnant en amont de l'étranglement (45 ; 50 ; 52) à la soupape de régulation de la pression (43) qui est ainsi agencée de manière à réguler le flux de la pompe en fonction du niveau de pression en amont de l'étranglement (45 ; 50 ; 52).

3. Transmission à variation continue selon la revendication 2, **caractérisée en ce que** l'étranglement hydraulique (52) est un composant rotatif de la transmission qui est lubrifié et refroidi par le flux d'huile déchargé par la soupape de régulation de la pression (43) jusqu'au réservoir (40).
